# EUROPEAN PATENT APPLICATION

(11) **EP 4 596 936 A1**
(43) Date of publication of application: **06.08.2025**
(21) Application number: 25155446.5
(22) Date of filing: 01.02.2025
(51) Int. Cl.: F16K 31/04, F16K 37/00

(54) **DEVICE FOR CONTROLLING THE OPERATION OF A BALL VALVE**

(30) Priority: 02.02.2024 IT 202400002166
(71) Applicant: I.S.I.F. S.r.l., 52026 Castelfranco Piandiscò (IT); Inrete Distribuzione Energia S.p.A., 40127 Bologna (IT)
(72) Inventor: ODORI, Mauro, 50026 Castelfranco Piandiscò (AR) (IT)
(74) Representative: Ruzzu, Giammario

(57) **Abstract**

SUMMARY

The control device (100, 200) is associated with a gearmotor group (2) which operates a ball valve (Vs) to open and close it, upon command of an electronic processing and control unit (3). A transceiver apparatus (4) is interfaced with said electronic processing and control unit (3) and communicates via radio frequency with a remote operations centre (5).

The control device (100, 200) comprises a positional control organ (101, 201), associated with said gearmotor unit (2), which obtains in real time the angular position assumed by the aforementioned ball valve (Vs) and transmits the acquired data to said electronic processing and control unit (3). Furthermore, a first and a second sensor organs (21, 22) are provided, associated with said gearmotor unit (2); the first detects the direction of rotation and activation time, while the second detects the angular amplitude completed from the start of the actuation; the data acquired by said sensor organs (21, 22) are transmitted to the aforementioned electronic processing and control unit (3), in which a program software interfaces them with the data supplied by the positional control organ (101, 201), to recalculate and verify, in a redundant manner, the actual angular position of the ball valve (Vs), gradually assumed during the actuation of said gearmotor group (2), before a report is sent to the remote operations centre (5).

## Description

### DESCRIPTION OF THE INVENTION

The present invention falls within the technical sector of networks for the transport and distribution of fluids, in particular flammable fluids such as gas pipelines, oil pipelines and the like.

### PRIOR ART OF THE INVENTION

Very often the pipelines that form these networks extend for several kilometers and branch out in multiple directions, covering even very large territorial extensions.

Along the above-mentioned pipelines, line valves are located, preferably of the ball type, to section off certain parts of the corresponding network and/or to stop the flow of fluid downstream of a certain point, for example for maintenance work.

The size of the above mentioned line valves are proportionate to the diameter of the associated pipes, which can vary, indicatively, between four and sixteen inches; normally, the rotation required to pass from the open position of the valve to the closed one, and vice versa, is approximately 90°.

In many cases, the pipelines of a transport or distribution network are located below ground level, and each line valve is accessible from a relative inspection manhole, closed for example by a manhole lid.

Under normal operating conditions of the respective fluid distribution network, the line valves are in the open position and this condition can persist for very long periods of time, several months or even years.

This long immobility of the valves almost certainly leads to their blocking; to avoid this, the companies that manage the distribution networks have been required to carry out a mandatory periodic movement cycle, usually at least every 1-2 months.

To carry out this cycle and maintain the correct manoeuvrability of the valves, one or more operators can be periodically sent to inspect each valve and manoeuvre it to obtain a partial closure and then, immediately afterwards, a new complete reopening.

To avoid the inconvenience and costs that sending personnel on site would entail, it was planned to equip each valve with a motorized actuation device that can be activated remotely.

In this regard, the same Applicant filed on 9 November 2021 the international PCT patent application published under No. WO2022/097118A1, having as its object a "*System for the automatic operation of line valves located in fluid distribution networks*"*.*

The system requires that each ball valve is equipped with a gearmotor group, capable of moving the relative rotary control in one direction or the other.

The gearmotor unit is associated with a sensor device that detects the rotation effected to the rotary control, and sends the data to an electronic processing and control unit, which activates/deactivates said gearmotor unit, according to a program for maintaining the function of the ball valve, which provides for a partial closure and subsequent immediate reopening at predefined time intervals. By means of a transceiver apparatus, said electronic processing and control unit sends a report regarding the outcome of the maneuver performed to a remote operations center. The system provides, in each station with a ball valve, a module for the power supply consisting of a photovoltaic panel, a battery charger and an accumulator, so as not to require connection to an electrical line.

Practical testing of the above-mentioned system confirmed the advantages that were expected and which, in preliminary theory, appeared reasonably achievable.

### TECHNICAL PROBLEM ADDRESSED BY THE INVENTION

However, problems have emerged related to the need to make the response sent via radio to the data collection center absolutely certain, regarding the actual success of the opening and subsequent closing of the ball valve.

In fact, a certain degree of uncertainty remains because anomalies could arise due to a valve blocking during the maneuver which for various reasons could not be detected by the aforementioned sensor organ associated with the gearmotor group.

Furthermore, it has been found that while some types of ball valves are suitable for being operated directly by the gearmotor unit, others require, instead, an additional intermediate speed reducer between said gearmotor unit and the vertical shaft, integral with the valve ball, already set up at the origin for its operation.

This fact may lead to different construction choices regarding the gearmotor group and its specific operating modes.

### OBJECTS OF THE INVENTION

The main object of the present invention is therefore to propose a control device for the actuation of a ball valve, shaped in such a way as to ensure that the sending of a response indicating that said valve has been moved is absolutely truthful, and that therefore it is possible to rely on such a response, received remotely, also with regard to the fact that the manoeuvre has been carried out correctly, as expected.

Another object of the invention is to provide a first embodiment of the control device which is suitable for being combined with a gearmotor unit directly engaged with the operating shaft of the ball valve.

A further object of the invention is to provide a second embodiment of the control device which is suitable for being combined with a gearmotor unit connected to the operating shaft of the ball valve with the interposition of a second speed reducer.

Another object of the invention is to create a gearmotor unit to which the first or second embodiment of the control device can be easily associated.

Yet another object of the invention concerns the desire to obtain a control device that has the possibility of regulating the timing of the respective organs in a very precise manner, so as to make it adaptable to any ball valve to which it is combined.

A further object is to realise the said embodiments of the control device, as well as all the other mechanical parts of the associated gearmotor, with a high level of robustness and great reliability of operation over time, despite the arduous conditions of use and presumably little or no maintenance.

### SUMMARY OF THE INVENTION

These and other objects are fully achieved by means of a control device for the actuation of a ball valve, the latter being of the type in which there is a rotation control, external to the valve body, and it is associated with a system which includes: a gearmotor group, mechanically connected to said rotary control, for the motorized closing and opening of said ball valve; an electronic processing and control unit, suitable for determining the activation or deactivation of said gearmotor group, according to predefined modes.

The above control device comprises:
- at least one positional control organ, associated with said gearmotor group, designed to obtain in real time the angular position assumed by the aforementioned ball valve as a consequence of the rotation imparted to it by the aforementioned gearmotor group, in particular the total opening, partial opening and closing positions, and to transmit the acquired data to the aforementioned electronic processing and control unit;
- first detection means, associated with said gearmotor group, intended to detect in real time the first actuation parameters of the latter, relating at least to the activation time, and to transmit the acquired data to the aforementioned electronic processing and control unit;
- second detection means, associated with said gearmotor group, intended to detect in real time second actuation parameters of the latter, relating at least to the angular amplitude completed from the start of the actuation, and to transmit the acquired data to the aforementioned electronic processing and control unit;
- a software procedure, operating in the electronic processing and control unit, provided with a suitable set of instructions for comparing the data supplied by the positional control organ, by the first detecting means and by the second detecting means, to recalculate and verify, in a redundant manner, the actual angular position of the aforementioned ball valve, gradually assumed during the actuation of the said gearmotor group.

### BRIEF DESCRIPTION OF THE DRAWINGS

The characteristic features of the invention will be apparent from the following description of two preferred embodiments of the device for controlling the actuation of a ball valve, of which the subject is, in accordance with the claims and with the aid of the attached drawing tables, wherein:
- Fig. 1 shows a schematic view of a ball valve equipped with a motorization system and remote connection to a control unit, and of the subject control device associated with said system;
- Fig. 2 shows a side view with sectioned parts of a gearmotor group, included in the system of Fig. 1 and directly engaged with the ball valve operating shaft, with said gearmotor group combined with a first embodiment of the control device;
- Fig. 3 illustrates a side view with sectioned parts of a gearmotor unit, substantially identical to that of Fig. 2, connected to the ball valve operating shaft with the interposition of a second speed reducer, with said gearmotor unit combined with a second embodiment of the control device;
- Figs. 4A, 4B, 4C illustrate schematic plan views of the aforementioned first embodiment of the control device, respectively in the phases of reading the positions of closed valve, partially open valve, fully open valve;
- Figs. 5A, 5C illustrate respective side views of the aforementioned Figs. 4A, 4C;
- Fig. 5B illustrates a sectional view along the W plane of Fig. 4B;
- Fig. 6A illustrates a schematic plan view of the aforementioned second embodiment of the control device;
- Figs. 7A, 7B illustrate side views of the aforementioned Fig. 6A, in the two phases of reading the positions of closed valve and partially open valve (Fig. 7A) and completely open valve (Fig. 7B);
- Fig. 8A illustrates a sectional view along the VII-VII plane of Fig. 7A;
- Fig. 8B illustrates a sectional view along the VIII-VIII plane of Fig. 7B.

### DETAILED DESCRIPTION OF THE INVENTION

In the above figures, the reference 100 indicates, as a whole, the subject control device, in its first embodiment, while the reference 200 indicates a second embodiment of said control device, as better specified below.

The control device 100, 200 monitors the actuation of a ball valve Vs, of known type, in which a rotation control shaft Cr is provided which is integral with the valve ball, extended upwards and consisting of a vertical shaft contained in a sleeve F, which is joined to the fixed structure of the ball valve Vs; the rotation of the shaft Cr, therefore, determines an equal angular rotation of the ball, for its closing and opening.

It is of course to be understood that the following description is provided mainly by way of example and not limitation, and that the device which is the subject of the invention can be equally advantageously used with other types of line valves.

The vertical shaft Cr is equipped at the top with a suitably shaped head T to allow a mechanical coupling, with rotation constraint, by a complementary bush 20 operated by a gearmotor group 2 to which said control device 100, 200 is associated.

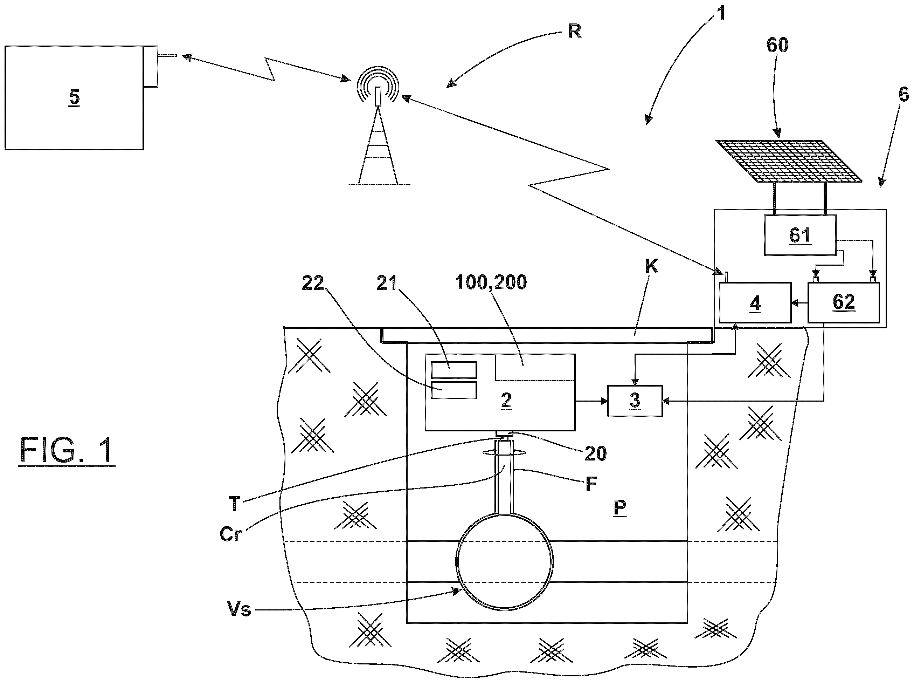

The gearmotor group 2, for the motorized closing and opening of said ball valve Vs, is part of a system 1 in which, in a known manner, there is also provided: an electronic processing and control unit 3, suitable for determining the activation or deactivation of said gearmotor group 2, according to predefined modes; a transceiver apparatus 4, connected in interface to said electronic processing and control unit 3 and intended to communicate, on radio frequency, with a remote operations center 5 (Fig. 1).

Preferably, said transceiver apparatus 4 is of the type suitable to be connected to a cellular telephone network R, or a satellite network.

In the example in Fig. 1, both the gearmotor group 2 and the electronic processing and control unit 3 are housed in the manhole P of the ball valve Vs, protected above by a cover, or manhole lid, K.

System 1 substantially resumes what is described in the previous document of the same Applicant cited in the introduction and, in this perspective, also includes a module 6 for the electrical energy supply in which at least one photovoltaic panel 60, a battery charger 61 and at least one accumulator 62 are provided.

According to the invention, the control device 100, 200 comprises:
- a positional control organ 101, 201, associated with said gearmotor unit 2, designed to detect in real time the angular position assumed by the aforementioned ball valve Vs as a result of the rotation imparted to it by the aforementioned gearmotor unit 2, in particular the fully open positions AT, partially open positions AP and closed positions X, and to transmit the acquired data to the aforementioned electronic processing and control unit 3; the aforementioned positional control organ 101, 201, as described in more detail below, is made up of fork sensors 102, 202, through each of which passes a witness 103, 203, moved by the gearmotor unit 2 in an appropriate phase relationship with the aforementioned rotation of the ball valve Vs;
- first detection means 21, associated with said gearmotor group 2, provided for detecting in real time the first operating parameters of the latter, at least relating to the activation time, and for transmitting the acquired data to the aforementioned electronic processing and control unit 3; such first detection means 21, illustrated schematically as a block in Fig. 1, are advantageously constituted by a dedicated computer program procedure resident and operating in the processing unit 3. The aforementioned procedure provides a counter and one or more threshold time values, preset or programmable by an operator, which define minimum and/or maximum execution times, for example for partial and total closing operations of the valve Vs. In essence, the counter is intended to be activated to allow the processing unit 3 to independently verify whether the execution times of the various controlled operations are carried out at the correct times. This is extremely important, for example, in the case of partial opening operations of the valve, to absolutely avoid that an unwanted total closing of the valve occurs instead. Such an eventuality, in the case of a Vs valve located on a major gas pipeline, would lead to unannounced interruptions in supply to even important users (factories, commercial users, etc.), which could have significant economic consequences, both for the users and for the service provider (for recovery actions, etc.).
- second detection means 22, associated with said gearmotor group 2, provided for detecting in real time second actuation parameters of the latter, relating at least to the angular amplitude completed from the start of the actuation, and for transmitting the acquired data to the aforementioned electronic processing and control unit 3; the aforementioned second detection means 22 have also been illustrated schematically as a block in Fig. 1. In particular, they may consist of an encoder mounted, according to substantially known methods and not illustrated in detail, integral with an input gear belonging to the kinematic chain of the gearmotor group 2.

In a variant implementation of the control device 100, 200, not illustrated, third detection means is also provided, installed in addition to or as an alternative to one of the detection means first 21 and second 22, fi to read the direction of rotation in which said gearmotor group 2 is operated.

In the aforementioned electronic processing and control unit 3 operates a software procedure, provided with a suitable set of instructions intended to compare the data supplied by the aforementioned positional control organ 101, 201, first detection means 21 and second detection means 22, to recalculate and verify the actual angular position of the aforementioned ball valve Vs, gradually assumed during the actuation of the said gearmotor group 2.

In case the aforementioned third detection means is also present, said software procedure is implemented to insert the additional data provided in said comparison.

It is important to highlight how, advantageously, the comparison between multiple readings, each one attributable in some way to the rotation of the ball valve Vs, makes the data received by the electronic processing and control unit 3 redundant; the software, therefore, is able to verify whether all the data are coherent, that is, whether everything has worked as expected, or whether there are inconsistent data that signal some operating anomaly.

The electronic processing and control unit 3, based on the signals received and the calculations performed by the program, is able to draw up a report regarding the outcome of each individual rotation maneuver performed on the ball valve Vs, which may be positive and guaranteed, or a warning if a malfunction of some kind has occurred.

The report is then sent, in real time, to the remote operations centre 5 by means of said transceiver apparatus 4.

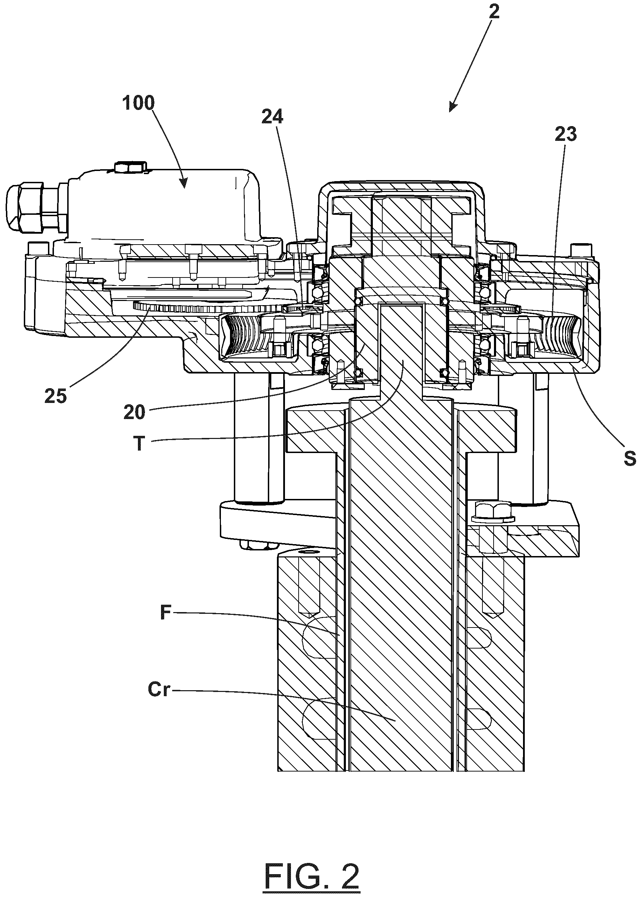

The control device 100, in said first embodiment is suitable for a gearmotor group 2 directly keyed, by means of the bush 20, onto the rotation control shaft Cr of the ball valve Vs (Fig. 2), whose angular excursion is approximately 90° between the open position AT and the closed position X, obviously equal to that of the Cr shaft itself.

The gearmotor group 2, in this version, provides a not very high reduction ratio between the revolutions of the electric motor (for example of the stepper type not illustrated in detail) and those of the bush 20: this ratio is identified with that existing between a worm screw (also not illustrated, keyed directly to the output of the electric motor) and the worm wheel 23 on whose vertical axis the aforementioned bush 20 is keyed (see again Fig. 2).

Mounted above the worm wheel 23, coaxial and integral with it, is a gear wheel 24, which engages and drives a second driven gear wheel 25, from which a vertical shaft 26 intended to provide motion to the control device 100, in the aforementioned first embodiment described below.

The gearmotor unit 2, being intended for heavy-duty use both due to environmental conditions and to foreseeable little, if any, maintenance, has been advantageously designed by providing a robust metal containment box S, with sealing gaskets, oil seal rings and everything else necessary to retain the grease and lubricants introduced at the origin, and also to prevent the entry of dirt and humidity.

The cited positional control organ 101 of the control device 100 consists of three aforementioned fork sensors 102, supported by an angular bracket 104 so that the fork sensors 102 are distributed radially along a circumference, with appropriate angular offsets from each other and positioned at different heights.

The fork sensors 102 are intended to be crossed by three tongue-shaped marks 103, protruding radially from the aforementioned vertical shaft 26 and angularly spaced according to pre-established phase shift angles, to respectively represent the aforementioned closing positions X, partial opening AP and complete opening AT of said ball valve Vs.

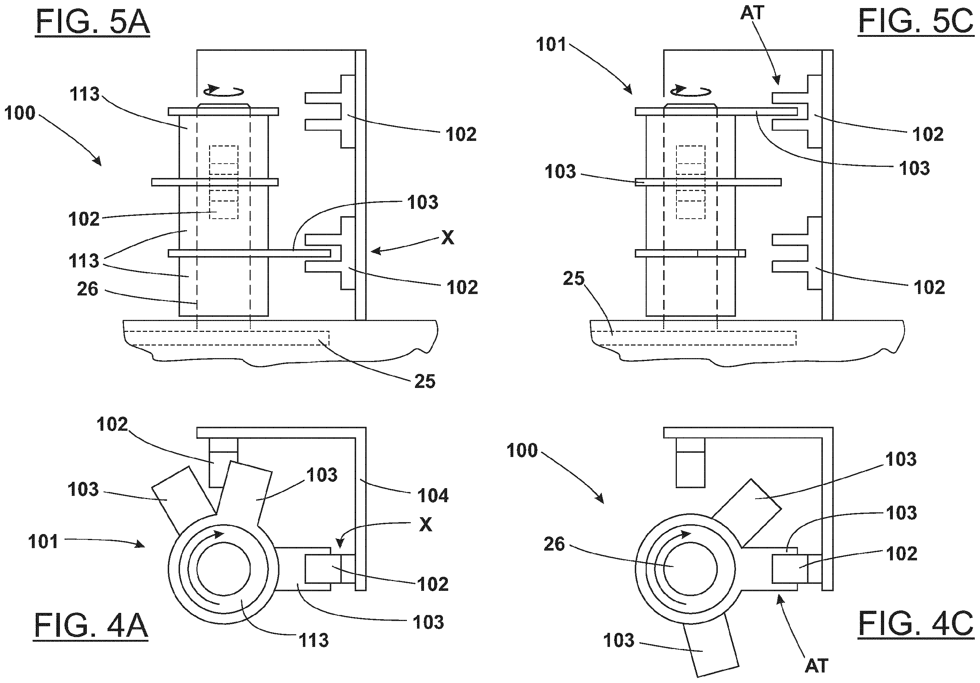

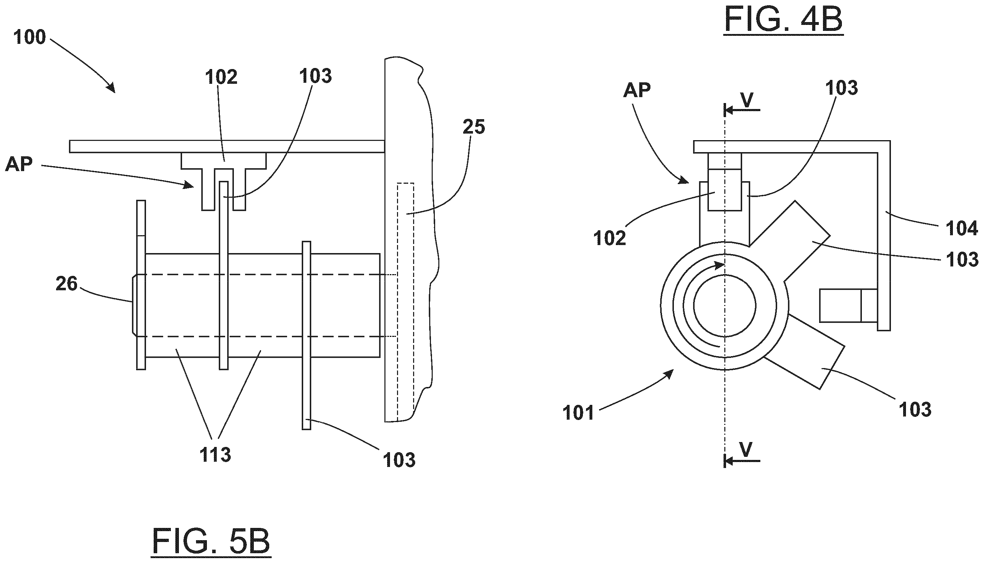

Conveniently, the vertical shaft 26 is arranged concentrically to the aforementioned circumference on which said fork sensors 102 are located and is moved into rotation with a suitable speed ratio by the aforementioned gearmotor group 2 through said second driven gear wheel 25, so that said tab marks 103 pass in suitable sequence through the respective fork sensors 102 (Figs. 4A, 4B, 4C, 5A, 5B, 5C).

The attached figures illustrate the sequence relating to the passage of the ball valve Vs from the closed position X to the fully open position AT, passing through the partially open position AP, which corresponds to the direction of rotation indicated for the vertical shaft 26; clearly, the reverse movement requires the inversion of the rotation of the electric motor and therefore of the gears connected to it.

Advantageously, it is expected that each of the three mentioned tongue marks 103 is integral with a respective barrel 113 intended to fit the aforementioned vertical shaft 26; assembly occurs by placing the first barrel 113, with the respective tongue mark 103, in a pre-established low position of said shaft 26, and with the subsequent two stacked in sequence on the first.

The barrels 103 have a height such that their arrangement in a stack determines the correct height of the corresponding tongue marks 103.

Still advantageously, it is envisaged that each of said barrels 113 can be fitted onto the aforementioned shaft 26 with such tolerance as to allow them both to slide and to be adjusted angularly.

In a preliminary calibration phase, each barrel 113, and the associated tongue mark 103, is made integral with the rotation of the shaft 26 by means of at least one radial locking screw (not shown), after the relative pre-established angular position corresponding to one of the said closed positions X (Figs. 4A, 5A), partial opening AP (Figs. 4B, 5B) and complete opening AT (Figs. 4C, 5C) of said ball valve Vs has been reached.

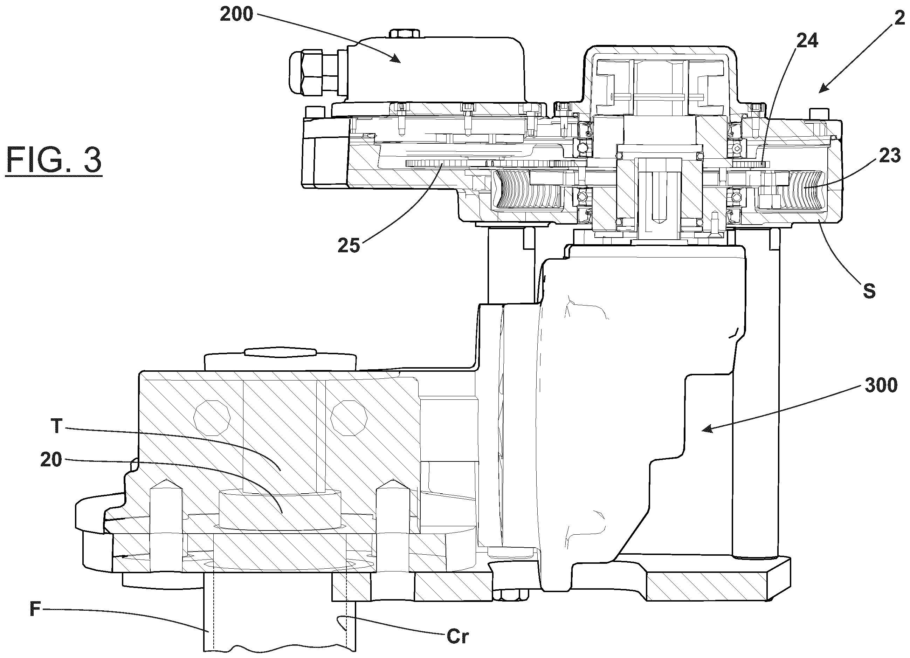

The control device 200, in said second embodiment, is suitable for a gearmotor group 2 connected at the output to a second rpm reducer 300, with the latter in turn engaged on the shaft of the rotation control Cr of the ball valve Vs by means of a relative sleeve 20 (Fig. 3).

The angular excursion of the ball valve Vs remains, obviously, approximately 90° between the open position AT and the closed position X, therefore the presence of the second rpm reducer 300, in series with gearmotor 2, determines a high reduction ratio between the revolutions of the electric motor (for example of the brushless type, not illustrated) and those of the sleeve 20.

The gearmotor 2 is entirely analogous to the one described with reference to the first embodiment of the control device, and therefore comprises a worm screw, driven by the motor, engaged in the worm wheel 23.

Above the worm wheel 23 is the aforementioned gear wheel 24, which engages and drives the second driven gear wheel 25 and the associated vertical shaft 26, which provides motion to the control device 200, in the second embodiment described below.

It is evident, therefore, that the gears just mentioned make many more turns, compared to what happens in the previously described condition, so that the second rpm reducer 300 downstream can transmit the complete rotation of approximately 90°, in one direction or the other, to the ball valve Vs.

The cited positional control organ 201 of the control device 200 consists of three aforementioned fork sensors 202, with two of them aligned and arranged at different heights, and a third placed next to the first two at a respective height; the fork sensors 202 are supported by a vertical plate 204, provided with suitable slots 205 to allow height adjustment of the fork sensors 202.

The three fork sensors 202 are intended to be crossed by two aforementioned tongue-shaped marks 203, parallel to each other and protruding from a common support 213, which, with the associated tongue marks 203, are moved vertically through a screw mechanism 206 and nut screw 216 operated by the aforementioned vertical shaft 26.

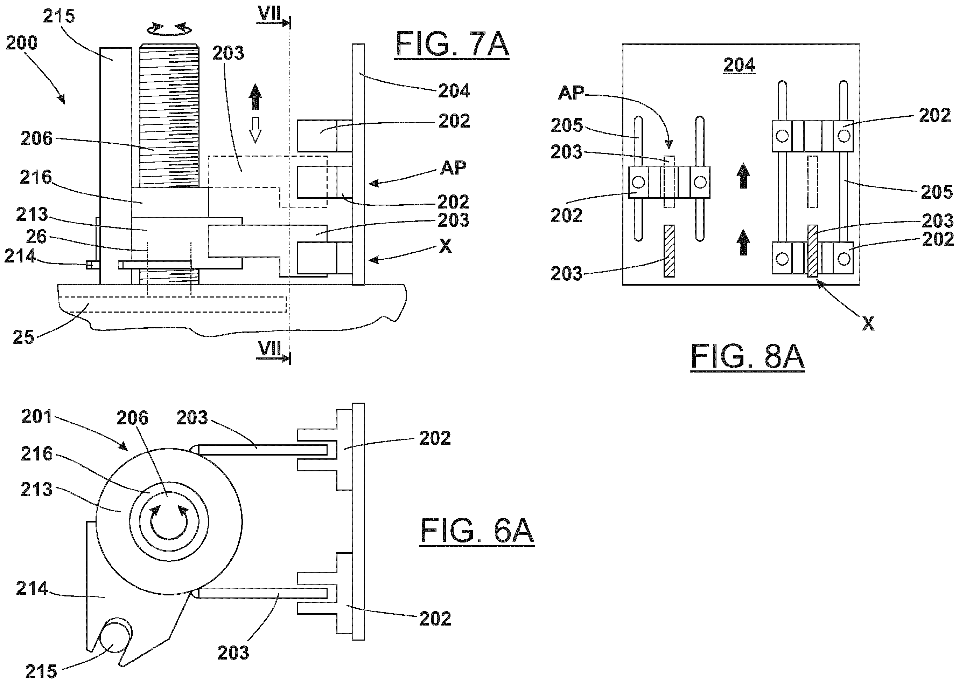

The screw 206 is made integral with the shaft 26, while the nut 216 is in a single body with the support 213, from which a fork 214 protrudes which engages, with an anti-rotation function, in a stem 215 arranged parallel to the side of the screw 206 (Figs. 6A, 7A, 7B, 8A, 8B).

The vertical translation of the support 213 and the tongue marks 203 is performed alternately from bottom to top and then from top to bottom, following the reversal of the rotation of the electric motor.

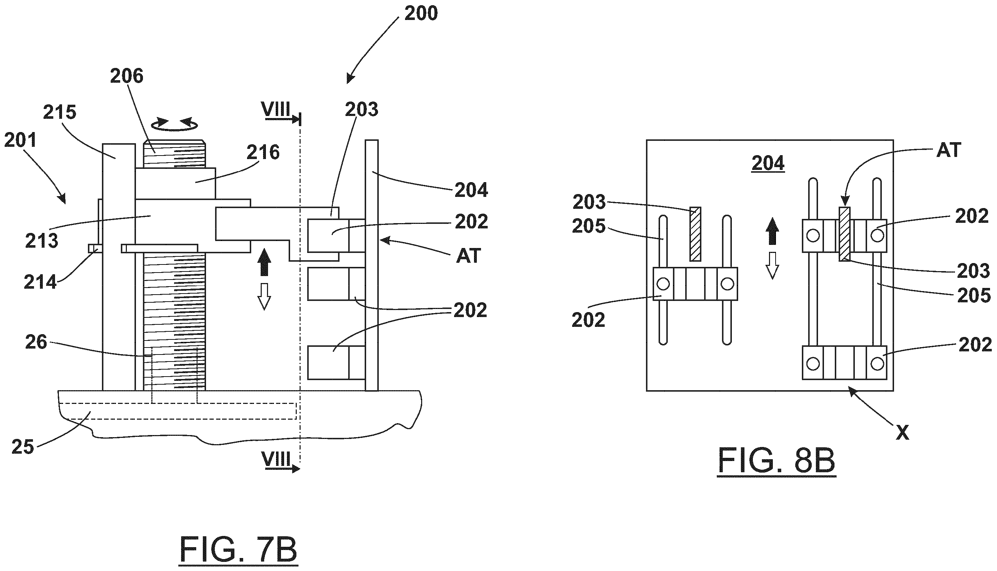

In the attached figures, the sequence of a translation from bottom to top is illustrated, where in order:
- one of the tongue marks 203 is found to engage the first at the bottom of the two fork sensors 202 aligned and superimposed to represent the closed position X of the ball valve Vs (Fig. 7A, Fig. 8A - fork sensor 202 in continuous line);
- a first rise of the support 213 and of the tongue marks 203 causes the other tongue mark 203 to engage the third fork sensor 202, to represent the partial opening position AP of the ball valve Vs (Fig. 7A, Fig. 8A - fork sensor 202 in the dotted line);
- a further rise of the support 213 and the tongue marks 203 causes the first tongue mark 203 to engage the second at the top of the two aligned and superimposed fork sensors 202, to represent the fully open position AT of the ball valve Vs (Fig. 7B, Fig. 8B).

As intuitively understandable, the transmission ratio that links the translation of the support 213 and the tongue marks 203 with the actual positions assumed by the ball valve Vs is also affected by the pitch, greater or lesser, of the thread of the screw mechanism 206 and nut screw 216.

From the preceding description, the advantages offered by the control device object of the invention are evident. In particular, the adoption of fork-type sensors in association with corresponding marks mechanically integral with the shaft of the ball valve allows to obtain a high reliability in the control. Furthermore, the additional controls of the valve position by means of an encoder, and of the command execution times by means of a counter configure a highly redundant control system, providing the absolute certainty that the actuation commands given to the valve correspond to the desired movement effects of the same, excluding any possibility of unwanted interruption of the flow on the line controlled by the valve.

It is therefore possible to have total confidence in the control system described above, whether the operations are carried out remotely or whether they are controlled by an operator on site, guaranteeing the total safety and reliability that must necessarily be present when it comes to networks for the transport and distribution of fluids, in particular flammable fluids such as gas pipelines, oil pipelines and similar.

Another advantageous aspect of the invention consists in having foreseen two specific embodiments of the positional control device, to be combined with a substantially identical gearmotor group, both when this is directly connected to the ball valve operating shaft, and when a second gearmotor is foreseen, arranged in series with said gearmotor.

In this regard, it is important to highlight how the assembly of one or the other of the embodiments of the control device on the same gearmotor group is easy and technically simple.

Another advantage of the invention lies in the fact that the preliminary operations for adjusting the timing of the device's components can be performed with high precision, to adapt it to each individual ball valve to which it is combined.

Finally, it is necessary to mention the care taken in the construction of both the control device components and those of the associated gearmotor, in order to achieve high robustness and great reliability of operation over time, despite the harsh conditions of use and presumably little or no maintenance.

It is understood, however, that the above description has an exemplifying and non-limiting value, therefore any variations in detail that may be necessary for technical and/or functional reasons are considered from now to fall within the same protective scope defined by the claims reported below.

## Claims

1. Device for controlling the operation of a ball valve (Vs), with the latter of the type in which there is a the rotation control shaft (Cr), external to the valve body, and is associated with a system (1) which includes: a gearmotor group (2), mechanically connected to said rotation control (Cr), for the motorized closing and opening of said ball valve (Vs); an electronic processing and control unit (3), suitable for determining the activation or deactivation of said gearmotor group (2), according to predefined modes; said control device (100, 200) being **characterized in that** it comprises:
- at least one positional control organ (101, 201), associated with said gearmotor group (2), designed to obtain in real time the angular position assumed by the aforementioned ball valve (Vs) as a consequence of the rotation imparted to it by the aforementioned gearmotor group (2), in particular the total opening (AT), partial opening (AP) and closing (X) positions, and to transmit the acquired data to the aforementioned electronic processing and control unit (3);
- at least first detection means (21), associated with said gearmotor group (2), designed to detect in real time the first actuation parameters of the latter, relating at least to the activation time, and to transmit the acquired data to the aforementioned electronic processing and control unit (3);
- at least second detection means (22), associated with said gearmotor group (2), designed to detect in real time second actuation parameters of the latter, relating at least to the angular amplitude completed from the start of the actuation, and to transmit the acquired data to the aforementioned electronic processing and control unit (3);
- a software procedure, operating in the aforementioned electronic processing and control unit (3), comprising means for comparing the data supplied by the aforementioned at least one positional control organ (101, 201), at least first detection means (21) and at least second detection means (22), to recalculate and verify, in a redundant manner, the actual angular position of the aforementioned ball valve (Vs), gradually assumed during the actuation of the aforementioned gearmotor group (2).

2. Control device according to claim 1, **characterised in that** said at least one positional control organ (101, 201) is made up of one or more fork sensors (102, 202), through each of which a mark (103, 203) passes, moved by the aforementioned gearmotor group (2) in an appropriate phase relationship with the aforementioned rotation of the ball valve (Vs).

3. Control device according to claim 2, suitable for a gearmotor group (2) equipped with direct mechanical coupling on said rotation control (Cr) of the ball valve (Vs), **characterized in that** said at least one positional control organ (101) is made up of three aforementioned fork sensors (102), distributed radially along a circumference, with appropriate angular offsets from each other and positioned at different heights, and three aforementioned tongue-shaped marks (103), protruding radially from a vertical shaft (26) and angularly spaced according to pre-established phase angles, to respectively represent the aforementioned closing position (X), partial opening position (AP) and complete opening position (AT) of said ball valve (Vs), with said vertical shaft (26) arranged concentrically to the aforementioned circumference on which said fork sensors (102) are located and moved in rotation with a suitable speed ratio by the aforementioned gearmotor group (2), so that said tongue marks (103) pass in a suitable sequence through the respective fork sensors (102).

4. Control device according to claim 3, **characterised in that** each of said three tongue marks (103) is fixed to a respective barrel (113) intended to fit the aforementioned vertical shaft (26), the first of said barrels (113) being placed in a pre-established low position of said shaft (26), and the next two barrels (113) being stacked in sequence on the first one, said barrels (113) being of such a height that their arrangement in the stack determines the correct height of the corresponding tongue marks (103).

5. Control device according to claim 4, **characterised in that** each of said barrels (113) is fitted on the aforementioned shaft (26) with a tolerance such as to allow it both sliding and angular adjustment, and **in that** each of said barrels (113) is provided with at least one radial locking screw with which it, and the associated tongue marks (103) are made integral with the same shaft (26) in the relative pre-established angular position.

6. Control device according to claim 2, suitable for a gearmotor group (2) connected at the output to a second gear reducer (300), with the latter in turn engaged with said rotation control (Cr) of the ball valve (Vs), **characterised in that** said at least one positional control organ (201) is made up of three aforementioned fork sensors (202), with two of them aligned and arranged at different heights, and a third one placed next to the first two at a respective height, and by two aforementioned tongue-shaped marks (203), parallel to each other and protruding from a common support (213), to respectively represent the closed position (X), the partial opening position (AP) and the complete opening position (AT) of said ball valve (Vs), with said support (213) as well as the associated tongue marks (203) moved vertically through a screw (206) and nut screw (216) mechanism, with this mechanism operated by a vertical shaft (26) operated in rotation with a suitable speed ratio by the aforementioned gearmotor unit (2), so that one of said tongue witnesses (203) has to pass in a suitable sequence through the aforementioned two aligned fork sensors (202) and superimposed, while the remaining tongue mark (203) is able to pass, with an appropriate phase relationship with respect to the other, into the aforementioned third fork sensor (202).

7. Control device according to claim 6, **characterised in that** said three fork sensors (202) are supported by a vertical plate (204), provided with suitable slots (205) suitable for allowing height adjustment of the aforementioned fork sensors (202).

8. Control device according to claim 6, **characterised in that** in said screw-nut mechanism, the screw (206) is made integral with said vertical shaft (26), while the nut (216) is in a single body with the aforementioned support (213), from which a fork (214) protrudes, designed to engage, with an anti-rotation function, a stem (215) arranged parallel to the side of the screw (206).

9. Control device according to one of the preceding claims 1 to 6, **characterised in that** said first detection means (21) comprises a dedicated computer program procedure resident and operating in the aforementioned electronic processing and control unit (3), said procedure being provided with a counter and one or more threshold time values, preset or programmable by an operator, with such values defining pre-established minimum and/or maximum execution times for certain partial and/or total closing maneuvers of the aforementioned ball valve (Vs), with the aforementioned counter intended to be activated to allow the same electronic processing and control unit (3) to independently verify whether the execution times of the various commanded operations are carried out within said threshold time values.

10. Control device according to one of the preceding claims 1 to 6, **characterised in that** the aforementioned second detecting means 22 comprises an encoder mounted integral with a gear belonging to the kinematic chain of the aforementioned gearmotor group (2).

11. Control device according to any of the preceding claims, **characterised in that** third detection means is provided, fit to read the direction of rotation in which said gearmotor group (2) is operated, and **in that** the aforementioned software procedure resident and operating in the aforementioned electronic processing and control unit (3) is appropriately implemented to insert the additional data provided by the aforementioned third detection means into the aforementioned comparison.
